# EUROPEAN PATENT SPECIFICATION

(11) **EP 2 274 063 B1**
(45) Date of publication and mention of the grant of the patent: **01.07.2015**
(21) Application number: 08750459.3
(22) Date of filing: 23.04.2008
(51) Int. Cl.: B01D 33/52, B01D 33/15, B01D 33/27

(54) **FILTER DEVICE COMPRISING ROTATABLE FILTER LAMELLAE.**
EINE DREHBARE FILTERLAMELLE UMFASSENDE FILTERVORRICHTUNG
DISPOSITIF FILTRANT COMPRENANT DES LAMELLES FILTRANTES ROTATIVES

(43) Date of publication of application: 19.01.2011
(73) Proprietor: RML-Tekniikka OY, 20540 Turku (FI)
(72) Inventor: TOIVONEN, Unto, FI-20540 Turku (FI)
(74) Representative: Kolster Oy Ab
(86) International application number: PCT/FI2008/050216
(87) International publication number: WO 2009/130362

(56) References cited:
- WO-A1-98/33574
- WO-A1-98/33574
- CH-A5- 673 958
- DE-A1- 2 726 356
- FI-L- 20 055 677
- FR-A- 1 043 314
- US-A- 4 186 089

## Description

### BACKGROUND OF THE INVENTION

The invention relates to a filter device and particularly to a fil-ter device as claimed in the preamble of claim 1, comprising a frame, rotatable lamella axes positioned at the frame at a distance from one another, filter la-mellae positioned on the lamella axes next to one another at a distance and arranged in such a manner that the filter lamellae on the adjacent lamella axes are arranged to overlap at least partly, whereby a liquid or material to be fil-tered is arranged to pass between the filter lamellae.

A liquid or other material may be filtered by a filter, which comprises rotatable lamella axes at a distance from one another and plate-like filter lamellae mounted on these lamella axes. Successive lamella axes are preferably positioned in a line extending stepwise obliquely upwards to provide a step filter. According to the operating principle of this filter, the lamella axes and the filter lamellae are placed in succession so that the filter lamellae of the successive lamella axes overlap at least partly, whereupon a liquid or material to be filtered flows from the gaps between the filter lamellae, but impurities or solid matter in the liquid or other material to be filtered cannot pass through the gaps between the plates. The filter plates rotating with the lamella axes rotate between one another, transferring away impurities and solid matter that have remained in the gaps between them from the gaps forward to the filter lamellae of the next axis. The filtered material then travels, carried by the filter lamellae rotating in the filter, to discharge means and away from the filtered, clean liquid or other material. The filter lamellae, which rotate between one another at least partly in an overlapping manner, also partly clean themselves, as the overlapping filter lamellae remove impurities and solid matter accumulated between the adjacent filter lamellae.

A problem with the arrangement described above is that, since the step filter uses rectangular or oval filter lamellae or filter lamellae having some other shape than round, the filter lamellae of the successive lamella axes overlap, due to their rotational motion, only partly for the most part of their revolution, whereby a gap remains between the lamella axis and the filter lamella overlapping between the filter lamellae adjacent to the lamella axis, which gap can be cleaned by the filter lamellae rotating between one another on only a part of the revolution of the filter lamellae. This means that the filter gap between the adjacent filter lamellae is blocked on at least part of the revolution of the filter lamellae when solid matter is packed in this gap. This may wedge the filter lamellae apart, whereupon they may bend and lead to malfunctions of the filter.

(WO 98/33574) discloses a filter wich consist of a housing 1, rotating axles 3 located within the housing 1 at some distance from each other and the filter elements or plates 4 mounted on them. The plates on adjacent axles are able to move against each other in the gaps. A collet or other spacer is advantageously placed between the plates 4. The distance between the axles is large enough that the plates can turn and do not contact the adjacent axles, but extent right into the immediate vicinity of the collets on the axles. The filter can be placed in a sloping position.

Swiss patent specification CH 673 958 A5 presents a prior art plane level filter arrangement for the purpose of removing moisture from the dry matter. CH 673 958 A5 presents a typical prior art coarse filter arrangement, which is not self-cleaning. As the filter element of CH 673 958 A5 is arranged in plane level the solid material does not stack upon itself to form a bed of solid matter from finer solid matter particles on top of the filter lamellae.

### BRIEF DESCRIPTION OF THE INVENTION

It is thus an object of the invention to provide a filter according to the characterizing part of claim 1 so that the above-mentioned problems can be solved. The object of the invention is achieved by a filter, which is char-acterized in that said filter device further comprising a rotatable auxiliary axis positioned obliquely in front of and below the last lamella axis having cleaning lamellae mounted on the auxiliary axis, said cleaning lamellae being arranged to extend to the gaps between the filter lamellae of the last lamella axis in the direction of motion of the material to be filtered.

Preferred embodiments of the invention are disclosed in the dependent claims.

In a preferred embodiment, the filter device comprises flow guides positioned close to an inlet conduit to the filter, said inlet conduit directed to the filter lamellae, said flow guides comprising a first flow guide turning the flow entering into the filter from the inlet conduit to the opposite direction and away from the filter lamellae, and a second flow guide turning the flow back towards the filter lamellae. The thickness of the intermediate lamellae may be greater than the thickness of the filter lamella. The thickness of the intermediate lamella may correspond to the thickness of the filter lamella, whereby the distance between the adjacent filter lamellae is longer than the thickness of the filter lamella. The intermediate lamellae may be arranged to be rotated together with the filter lamella on the lamella axis. The size of the intermediate lamellae may be smaller than that of the filter lamellae. The intermediate lamellae between the adjacent filter lamellae may also be shaped in such a manner that a gap between the outermost edge of the intermediate lamella and the outermost edge of the filter lamella overlapping between said adjacent filter lamellae is minimized in the course of the revolution of the filter lamellae. The filter lamellae may have a rectangular shape. The intermediate lamellae may have an oval shape. The intermediate lamellae may be mounted on the lamella axis in such a manner that their longitudinal axis is parallel to the longitudinal direction of the filter lamellae.

The method and system of the invention provide the advantage that cleaning of the gap between the adjacent filter lamellae by means of intermediate lamellae may be made more effective, which improves the filtering result considerably, since all impurities and solid matter tend to accumulate on the filter lamellae of the last lamella axis or pass through them. Due to the design of the intermediate lamella, the gap between the adjacent filter lamellae may be blocked in a controlled manner, whereupon the filter gap between the adjacent filter lamellae can be reduced and the filter is capable of achieving a better filtering result. In addition, the intermediate lamellae according to the invention stiffen the filter lamella pack consisting of adjacent filter lamellae.

### BRIEF DESCRIPTION OF THE FIGURES

The invention will now be described in greater detail in connection with preferred embodiments with reference to the attached drawings, in which
Figures 1A to 1D show an embodiment of a filter according to the present invention; and
Figures 2 to 8 show an embodiment of filter lamellae and intermediate lamellae of the filter of an embodiment of the invention.

### DETAILED DESCRIPTION OF THE INVENTION

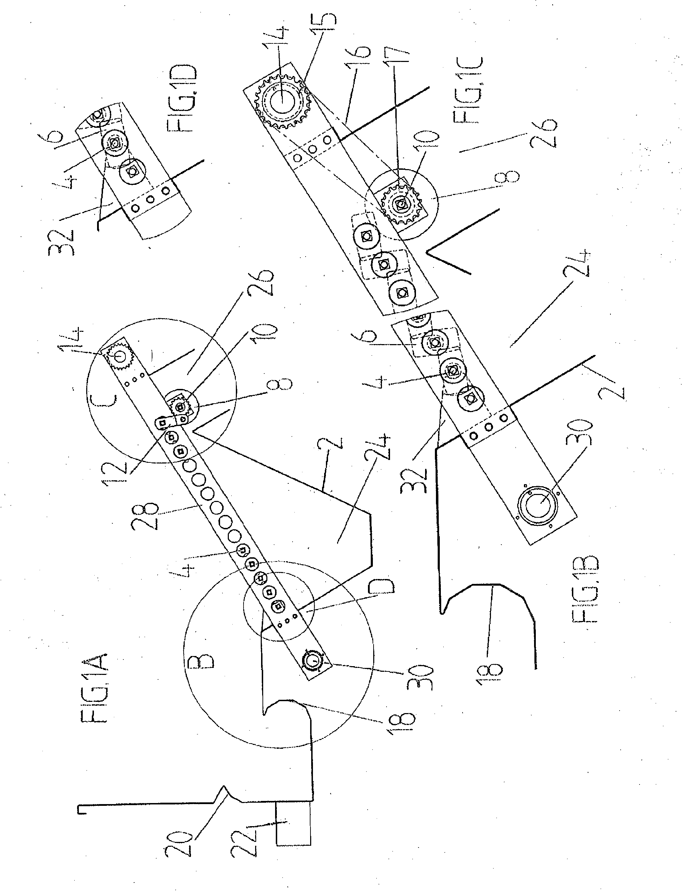

With reference to Figure 1A, a principle view of an embodiment of a filter according to the present invention is shown. The filter comprises a frame 2, which is provided with an inlet conduit 22, through which a liquid or material to be filtered is supplied into the filter. The filter also comprises an outlet conduit 24 for filtered liquid and an outlet conduit 26 for filtered solid matter. Accordingly, the outlet conduits 24 and 26 may comprise a discharge container or a basin and/or outlet pipes as well as feasible pumps for forwarding the filtered material.

The outlet conduits 24 and 26 for liquid and solid matter are positioned successively according to Figure 1A. The filter frame 2 is further provided with a holder 28, on which lamella axes 4 are mounted successively at regular intervals from one another. The holder 28 extends obliquely upwards in the direction of motion of the material to be filtered, in which case the lamella axes are also mounted obliquely upwards on the holder 28 in succession. The lamella axes 4 are rotated by a motor or some other power source 30. In the figures the direction of rotation of the lamella axes 4 is clockwise. The lamella axes 4 are connected to the power source 30 by power transmission means, which preferably rotate all lamella axes 4 at the same speed. In Figures 1A to 1 D, the lamella axes 4 are rotated clockwise in the figures. Filter lamellae 6 are mounted at a distance from one another on the lamella axes, overlapping in the gaps between the corresponding filter lamellae 6 of the adjacent lamella axis 4, whereby the gaps between the adjacent filter lamellae on the same lamella axis 4 become smaller. Lamella axes 4 are mounted on the holder 28 in succession such that they extend over the outlet conduit 24 for liquid, whereby the liquid is able to pass and drop from the gaps between the filter lamellae 6 to the outlet conduit 24 for liquid, while the filtered solid matter is transferred forwards by the rotational motion of the filter lamellae 6. The holder 28 and lamella axes 4 extend as far as to the outlet conduit 26 for solid matter, whereby solid matter carried on top of the filter lamellae passes over the outlet conduit 24 for liquid to the outlet conduit 26 for solid matter, where it drops or is transferred from the last filter lamellae 6.

Close to the last lamella axis 4, preferably below it, there is provided a rotatable auxiliary axis 10, which in the solution of Figure 1C is connected to the holder 28. In Figures 1A and 1C, the auxiliary axis is positioned obliquely in front of and below the last lamella axis 4. Cleaning lamellae 8 are mounted on the auxiliary axis 10, which are arranged to extend to the gaps between the filter lamellae 6 of the highest lamella axis 4, which is the last lamella axis in the direction of motion of the material to be filtered. The auxiliary axis 10 is rotated in the same direction as the lamella axes 4, i.e. clockwise in Figure 1C. The cleaning lamellae 8 push away the solid matter or impurities accumulated in the gaps between the filter lamellae of the last lamella axis 4 and transfer them to the outlet conduit 26 for solid matter.

The auxiliary axis 10 may be fixed to the holder 28 in the same way as the lamella axes 4 or by separate fixing means 12, as shown in Figure 1A. The auxiliary axis 10 may be functionally connected to at least one lamella axis 4 or, alternatively, to the power transmission means connected to the lamella axes 4, in which case the auxiliary axis 10 receives its rotational power from the same power source as the lamella axes 4. Consequently, the auxiliary axis 10 may be rotated at the same speed as the lamella axes 4. Alternatively, between the auxiliary axis 10 and the lamella axes 4 or between the auxiliary axis 10 and the power transmission means connecting the lamella axes 4 there are connected transmission means, by which the rotational speed of the auxiliary axis 10 may be changed with respect to the rotational speed of the lamella axes 4. Thus, the auxiliary axis 10 and the cleaning lamellae 8 thereon may be rotated faster than the lamella axes 4, which improves the cleaning of the gaps between the filter lamellae 6 of the last lamella axis 4 and transfer of solid matter separated by the filter lamellae to the outlet conduit 26 for solid matter. In Figures 1A and 1C, the transmission means comprise a transmission axis 14, which is functionally connected to the power source 30 or to the power transmission means connecting the power source 30 and the lamella axes 4 or directly to one or more lamella axes 4. A first pulley 15 is mounted on the transmission axis 14 and a second pulley 17 is mounted on the auxiliary axis 10. The pulleys are connected to one another by a belt 16. The diameters of these pulleys are selected so that the auxiliary axis 10 rotates faster than the lamella axes 4. However, it is also possible to select the diameters of the pulleys 15, 17 in some alternative manner. Alternatively, the power transmission means may be provided by cogwheel means or some other similar transmission means. Instead of the belt 16 and the pulleys 15, 17, a chain and chain pulleys may be used.

Alternatively, the auxiliary axis 10 or the transmission means may be connected to a separate auxiliary power source, which is separate from the power source 30. In this case, rotation of the auxiliary axis 10 may be controlled by this auxiliary power source or its control means. The auxiliary power source may then be arranged to rotate the auxiliary axis 10 faster or slower than the lamella axes 4 or at the same speed as them. The auxiliary power source also rotates the auxiliary axis 10 independently of the lamella axes 4.

According to Figures 1A and 1C, the cleaning lamellae 8 are round plate-like elements, but they may also have a substantially oval, rectangular, polygonal or some other shape. Although the auxiliary axis is positioned below the last lamella axis in the embodiment of Figures 1A to 1D, it may also be put, if desired, in the same line with the lamella axes 4 or above the last lamella axis 4.

Using the auxiliary axis and the cleaning lamellae eliminates the problem relating to cleaning of the filter lamellae on the last lamella axis, which results from the fact that the cleaning of the filter lamellae on the last lamella axis is only carried out by means of the filter lamellae on the second last lamella axis. In other words, in the gaps between the filter lamellae of the last lamella axis, filter lamellae of the adjacent lamella axis only overlap from one side of the last lamella axis, whereas in the gaps between the filter lamellae of the preceding lamella axes, filter lamellae of the adjacent lamella axes overlap from both sides. A poor self-cleaning of the last axis impairs the filtering result of the filtering equipment. Problems are caused by solid matter in particular, which tends to adhere to the filter lamellae.

This problem is, however, eliminated by cleaning lamellae, whereby impurities and solid matter may also be removed efficiently from the filter lamellae of the last lamella axis and transferred to a solid matter outlet or discharge means. The auxiliary axis is preferably rotated faster than the lamella axes.

According to Figures 1B and 1D, in front of the filter lamellae and the first lamella axis 4 in the flow direction of a liquid or material to be filtered there are fixed lamellae 32 mounted at a distance from one another and leading the material to be filtered to the filter lamellae 6 rotating on the lamella axes 4. The fixed lamellae 32 are mounted preferably detachably on the holder 28 and/or the filter frame 2, in which case they may be detached from the filter for cleaning.

The filter is also provided with flow guides, the purpose of which is to equalize and diminish the flow pressure of the filtering material to be supplied through the inlet conduit 22 to the filter, directed to the filter lamellae. The flow guides are provided close to the inlet conduit 22 in such a manner that flow of the filtering material or liquid to be supplied to the filter can be guided immediately when it enters into the filter. In Figure 1A, the flow guides comprise a first flow guide 18, which turns the flow entering into the filter from the inlet conduit 22 to the opposite direction and away from the filter lamelle, and a second flow guide 20, which, for its part, turns the flow back towards the filter lamellae. Thus, the flow direction is turned twice, whereby its flow intensity decreases considerably and, simultaneously, the flow pressure directed by the flow to the filter lamellae is also reduced. Thereby less solid matter penetrates into and through the gaps between the filter lamellae 6.

The filter may also be connected with ultrasonic washing means in such a manner that ultrasound may be utilized while the filtering equipment is washed. The ultrasonic washing means may also constitute a part of the rest of the washing system. Ultrasonic washing and other washing may be arranged to be automatic and occur at predefined intervals or it may be performed whenever necessary. In ultrasonic washing, an oscillator converts electric energy into sound waves of 30 kHz/1 kW, for example. Such ultrasonic washing may last for 20 minutes, for instance, and it may be performed after preliminary washing by using water or some other liquid, such as a lye-bearing washing agent, as a medium.

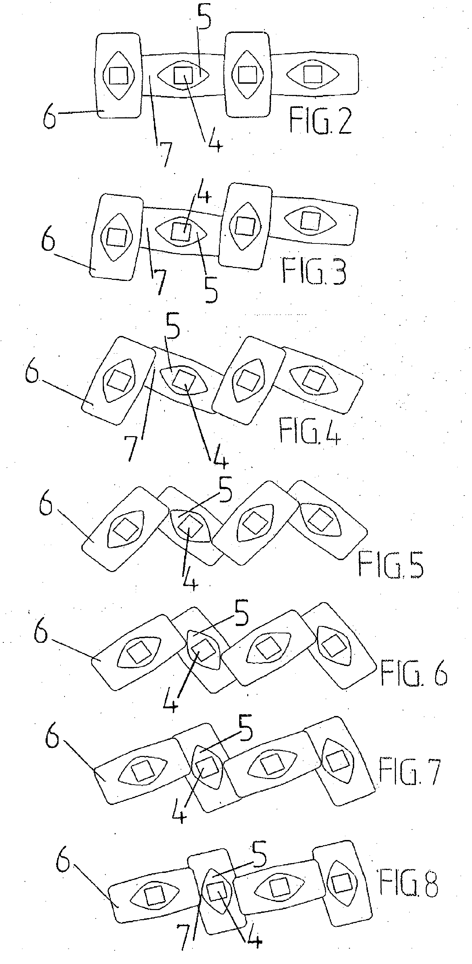

Figures 2 to 8 show the principle of the filter lamella operation 6 when the filter is in use. The figures illustrate the positions of the filter lamellae 6 in stages as they rotate clockwise during the filter use. In accordance with Figures 2 to 8, an intermediate lamella 5 is mounted between the adjacent cleaning lamellae 6 on the same lamella axis 4. The size of the intermediate lamella 5 is smaller than that of the filter lamella and its thickness substantially corresponds to the thickness of the filter lamella 6 in a preferred embodiment, whereby the distance between the adjacent filter lamellae 6 is a bit longer than the thickness of the filter lamella 6. Alternatively, the thickness of the intermediate lamella 5 may be greater than the thickness of the filter lamella when it is desired that the size of the filter gap defined by the distance between the adjacent filter lamellae 6 would be bigger. If desired, the thickness of the intermediate lamella 5 may also be smaller than the thickness of the filter lamella, because a rotational clearance of 0.1 to 0.15 mm is typically used between the filter lamellae 6 and/or the intermediate lamellae 5. As stated above, it is possible to provide a desired distance between the adjacent filter lamellae by using an intermediate lamella. The intermediate lamellae 5 are arranged to be rotated together with the filter lamellae 6 on the lamella axis 4.

The intermediate lamellae 5 are positioned in the filter in such a manner that the intermediate lamella 5 between the adjacent filter lamellae 6 of the lamella axis 4 is arranged to extend between the lamella axis 4 and the filter lamella 6 overlapping between said adjacent filter lamellae 6. In other words, the intermediate lamella 5 extends between the adjacent filter lamellae, where also the filter lamella 6 of the adjacent lamella axis 4 overlaps. In this case, the intermediate lamella 5 and the overlapping filter lamella 6 fill the filter gap between the adjacent filter lamellae. The better or the more complete this filter gap is filled while the filter lamellae 6 ofläpio the filter rotate, the denser the filtering surface of the filter becomes, and it is capable of achieving an even better filtering result. Also, the intermediate lamellae 5 prevent the gap between the adjacent filter lamellae 6, i.e. the filter gap, from growing and stiffen the structure of the filter lamellae or the filter lamella zone.

When round filter lamellae 6 and intermediate lamellae 5 are used, the filter gap may in practice be blocked entirely, since the outer edges of the round filter lamellae 6 and intermediate lamellae 5 may almost be in contact with one another for the entire revolution because of the rotationally symmetrical shape. In this case, the real filter gap is formed by the rotational clearance between the filter lamellae 6 and/or the intermediate lamellae 5, which is smaller than the above-mentioned filter gap. The aforementioned preferred solution is, however, not implemented when the filter lamellae are oval, rectangular or have a shape other than round.

In the case according to Figures 2 to 8, it is shown by way of example that the filter lamellae 6 have a substantially rectangular shape. As can be seen from these figures, the distance of the outer edge, or tip, of the filter lamellae from the adjacent lamella axis 4 changes while the filter lamella 6 rotates. When the intermediate lamella 5 between the adjacent filter lamellae 6 of the lamella axis 4 is arranged to extend between the lamella axis 4 and the filter lamella 6 overlapping between said adjacent filter lamella 6, a gap 7 is formed between the filter lamellae 6 and the intermediate lamella 5 in specific rotation positions, as shown in Figures 2, 3, 4 and 8. The gap 7 is different in different rotation positions. To minimize the gap 7, the intermediate lamella 5 between the adjacent filter lamellae 6 is shaped such that the gap 7 between the outermost edge of the intermediate lamella 5 and the outermost edge of the filter lamella 6 overlapping between said adjacent filter lamellae 6 can be substantially minimized in the course of the revolution of the filter lamellae 6. The gap 7 is preferably not minimized in a specific position but the purpose is to minimize the cumulative gap 7 in the course of the entire revolution. In this case, the intermediate lamella 5 may be formed such that between the adjacent filter lamellae 6 its shape substantially corresponds to the orbit of the outermost edge of the adjacent filter lamella 6 overlapping between the adjacent filter lamellae 6 at least on a part of the revolution of the filter lamellae 6. This can be seen in Figures 5, 6 and 7, where the outermost edge of the filter lamella 6 travels along the outermost edge of the intermediate lamella 5.

In the embodiment of Figures 2 to 8, the filter lamellae 6 have a substantially rectangular shape and the intermediate lamellae 5 have a substantially oval or elliptical shape. The intermediate lamellae 5 are also mounted on the lamella axis 4 in such a manner that their longitudinal axis is substantially parallel to the longitudinal direction of the filter lamellae 6. The gap 7 may thus be efficiently minimized in the course of the revolution of the filter lamellae 6 and the intermediate lamella 5. The filter gap between the adjacent filter lamellae 6 may thus be minimized, in other words filled, as efficiently as possible in the course of the revolution, which means that the rotational clearance to an increasing degree covers the filter gap between the lamellae, stopping the solid matter particles. With this change in the filter gap, a bed of solid matter can be formed faster from finer solid matter particles on top of the filter lamellae, whereby solid material of a specific size passes through, the bigger material does not. The passing material can thus be separated from the material that remains on the filter element and has to be transferred away. In particular, this provides the advantage that the filter may be used for separating materials or products having a smaller size than before. In addition, the oval shape of the intermediate lamellae, in accordance with the invention, provides the filter lamellae with a longitudinal support.

It is obvious to a person skilled in the art that the desired end product of the material to be filtered may be either a filtered liquid or solid matter, depending on the material to be filtered.

## Claims

1. A filter device comprising a frame (2), rotatable lamella axes (4) positioned at the frame (2) at a distance from one another, filter lamellae (6) positioned on the lamella axes (4) next to one another at a distance in a line extending obliquely upwards in succession and arranged in such a manner that the filter lamellae (6) on the adjacent lamella axes (4) are arranged to overlap at least partly, whereby a liquid or material to be filtered is arranged to pass between the filter lamellae (6), and said filter device further comprising intermediate lamellae (5) mounted between the adjacent filter lamellae (6) on the same lamella axis (4) to provide a distance between the adjacent filter lamellae (6) and to clean the gap between the adjacent filter lamellae (6), **characterized in that** said filter device further comprising a rotatable auxiliary axis (10) positioned obliquely in front of and below the last lamella axis (4) having cleaning lamellae (8) mounted on the auxiliary axis (10), said cleaning lamellae (8) being arranged to extend to the gaps between the filter lamellae (6) of the last lamella axis (4) in the direction of motion of the material to be filtered.

2. A filter device as claimed in claim 1, **characterized in that** the filter device comprises flow guides (18), (20) positioned close to an inlet conduit (22) to the filter, said inlet conduit (22) directed to the filter lamellae, said flow guides comprising a first flow guide (18) turning the flow entering into the filter from the inlet conduit (22) to the opposite direction and away from the filter lamellae, and a second flow guide (20) turning the flow back towards the filter lamellae.

3. A filter device as claimed in claim 1 or 2, **characterized in that** the thickness of the intermediate lamellae (5) is greater than the thickness of the filter lamella (6).

4. A filter device as claimed in claim 1, 2 or 3, **characterized in that** the thickness of the intermediate lamella (5) corresponds to the thickness of the filter lamella (6), whereby the distance between the adjacent filter lamellae (6) is longer than the thickness of the filter lamella (6).

5. A filter device as claimed in any one of the preceding claims 1 to 4, **characterized in that** the intermediate lamellae (5) are arranged to be rotated together with the filter lamellae (6) on the lamella axis (4).

6. A filter device as claimed in any one of the preceding claims 1 to 5, **characterized in that** the size of the intermediate lamellae (5) is smaller than that of the filter lamellae (6).

7. A filter device as claimed in any one of the preceding claims 1 to 6, **characterized in that** the intermediate lamella (5) between the adjacent filter lamellae (6) is shaped in such a manner that a gap (7) between the outermost edge of the intermediate lamella (5) and the outermost edge of the filter lamella (6) overlapping between said adjacent filter lamellae (6) is minimized in the course of the revolution of the filter lamellae (6).

8. A filter device as claimed in any one of the preceding claims 1 to 7, **characterized in that** the filter lamellae (6) have a rectangular shape.

9. A filter device as claimed in claim 8, **characterized in that** the intermediate lamellae (5) have an oval shape.

10. A filter device as claimed in claim 9, **characterized in that** the intermediate lamellae (5) are mounted on the lamella axis (4) in such a manner that their longitudinal axis is parallel to the longitudinal direction of the filter lamellae (6).

## Patentansprüche

1. Filtervorrichtung, umfassend einen Rahmen (2), drehbare Lamellenachsen (4), die am Rahmen (2) in einem Abstand zueinander angeordnet sind, Filterlamellen (6), die auf den Lamellenachsen (4) nebeneinander in einem Abstand in einer Linie, welche schräg nach oben verläuft, nacheinander positioniert sind und derart angeordnet sind, dass die Filterlamellen (6) auf den benachbarten Lamellenachsen (4) derart angeordnet sind, dass sie einander zumindest teilweise überdecken, wodurch eine Flüssigkeit oder ein Material, die/das gefiltert werden soll, zum Durchlaufen zwischen den Filterlamellen (6) angeordnet ist, und wobei die Filtervorrichtung ferner zwischenliegende Lamellen (5) umfasst, die zwischen den benachbarten Filterlamellen (6) auf derselben Lamellenachse (4) zum Vorsehen eines Abstands zwischen den benachbarten Filterlamellen (6) und zum Reinigen des Spalts zwischen den benachbarten Filterlamellen (6) angebracht sind, **dadurch gekennzeichnet, dass** die Filtervorrichtung ferner eine drehbare Hilfsachse (10) umfasst, die schräg vor und unter der letzten Lamellenachse (4) mit Reinigungslamellen (8) angeordnet ist, welche auf der Hilfsachse (10) angebracht sind, wobei die Reinigungslamellen (8) derart angeordnet sind, dass sie zu den Spalten zwischen den Filterlamellen (6) der letzten Lamellenachse (4) in der Bewegungsrichtung des Materials, das gefiltert werden soll, verlaufen.

2. Filtervorrichtung nach Anspruch 1, **dadurch gekennzeichnet, dass** die Filtervorrichtung Stromführungen (18), (20) umfasst, die nahe an einer Einlassleitung (22) zum Filter angeordnet sind, wobei die Einlassleitung (22) zu den Filterlamellen hin gerichtet ist, wobei die Stromführungen eine erste Stromführung (18), die den Strom, der aus der Einlassleitung (22) in den Filter eintritt, in die Gegenrichtung und weg von den Filterlamellen richtet, und eine zweite Stromführung (20) umfassen, die den Strom zurück zu den Filterlamellen hin richtet.

3. Filtervorrichtung nach einem der Ansprüche 1 oder 2, **dadurch gekennzeichnet, dass** die Stärke der zwischenliegenden Lamellen (5) größer als die Stärke der Filterlamellen (6) ist.

4. Filtervorrichtung nach einem der Ansprüche 1, 2 oder 3, **dadurch gekennzeichnet, dass** die Stärke der zwischenliegenden Lamellen (5) der Stärke der Filterlamellen (6) entspricht, wobei der Abstand zwischen den benachbarten Filterlamellen (6) länger als die Stärke der Filterlamellen (6) ist.

5. Filtervorrichtung nach einem der vorhergehenden Ansprüche 1 bis 4, **dadurch gekennzeichnet, dass** die zwischenliegenden Lamellen (5) derart angeordnet sind, dass sie zusammen mit den Filterlamellen (6) auf der Lamellenachse (4) gedreht werden.

6. Filtervorrichtung nach einem der vorhergehenden Ansprüche 1 bis 5, **dadurch gekennzeichnet, dass** die Größe der zwischenliegenden Lamellen (5) kleiner als jene der Filterlamellen (6) ist.

7. Filtervorrichtung nach einem der vorhergehenden Ansprüche 1 bis 6, **dadurch gekennzeichnet, dass** die zwischenliegende Lamelle (5) zwischen den benachbarten Filterlamellen (6) derart geformt ist, dass ein Spalt (7) zwischen der äußersten Kante der zwischenliegenden Lamelle (5) und der äußersten Kante der Filterlamelle (6), die zwischen den benachbarten Filterlamellen (6) überlappt, im Verlauf der Umdrehung der Filterlamellen (6) minimiert wird.

8. Filtervorrichtung nach einem der vorhergehenden Ansprüche 1 bis 7, **dadurch gekennzeichnet, dass** die Filterlamellen (6) eine Rechteckform aufweisen.

9. Filtervorrichtung nach Anspruch 8, **dadurch gekennzeichnet, dass** die zwischenliegenden Lamellen (5) eine ovale Form aufweisen.

10. Filtervorrichtung nach Anspruch 9, **dadurch gekennzeichnet, dass** die zwischenliegenden Lamellen (5) derart auf der Lamellenachse (4) angebracht sind, dass ihre Längsachse parallel zur Längsrichtung der Filterlamellen (6) verläuft.

## Revendications

1. Dispositif filtrant comprenant un châssis (2), des axes de lamelles rotatives (4) positionnés au niveau du châssis (2) à une certaine distance les uns des autres, des lamelles filtrantes (6) positionnées sur les axes de lamelles (4) les unes à côté des autres et à une certaine distance les unes des autres dans une ligne s'étendant obliquement vers le haut à la suite et agencées de sorte que les lamelles filtrantes (6) sur les axes de lamelles adjacentes (4) soient agencées pour se chevaucher au moins partiellement, moyennant quoi un liquide ou matériau devant être filtré est agencé pour passer entre les lamelles filtrantes (6), et ledit dispositif filtrant comprenant en outre des lamelles intermédiaires (5) montées entre les lamelles filtrantes adjacentes (6) sur le même axe de lamelle (4) pour fournir une distance entre les lamelles filtrantes adjacentes (6) et pour nettoyer l'espace entre les lamelles filtrantes adjacentes (6), **caractérisé en ce que** ledit dispositif filtrant comprend en outre un axe auxiliaire rotatif (10) positionné obliquement devant et sous le dernier axe de lamelle (4) comprenant des lamelles nettoyantes (8) montées sur l'axe auxiliaire (10), lesdites lamelles nettoyantes (8) étant agencées pour s'étendre vers les espaces entre les lamelles filtrantes (6) du dernier axe de lamelle (4) dans la direction de déplacement du matériau devant être filtré.

2. Dispositif filtrant selon la revendication 1, **caractérisé en ce que** le dispositif filtrant comprend des guides d'écoulement (18), (20) positionnés près d'une conduite d'admission (22) du filtre, ladite conduite d'admission (22) étant dirigée vers les lamelles filtrantes, lesdits guides d'écoulement comprenant un premier guide d'écoulement (18) dirigeant l'écoulement pénétrant dans le filtre depuis la conduite d'admission (22) vers la direction opposée et à distance des lamelles filtrantes, et un second guide d'écoulement (20) redirigeant l'écoulement vers les lamelles filtrantes.

3. Dispositif filtrant selon la revendication 1 ou 2, **caractérisé en ce que** l'épaisseur des lamelles intermédiaires (5) est supérieure à l'épaisseur des lamelles filtrantes (6).

4. Dispositif filtrant selon la revendication 1, 2 ou 3, **caractérisé en ce que** l'épaisseur de la lamelle intermédiaire (5) correspond à l'épaisseur de la lamelle filtrante (6), moyennant quoi la distance entre les lamelles filtrantes adjacentes (6) est plus longue que l'épaisseur de la lamelle filtrante (6).

5. Dispositif filtrant selon l'une quelconque des revendications précédentes 1 à 4, **caractérisé en ce que** les lamelles intermédiaires (5) sont agencées pour être entraînées en rotation conjointement avec les lamelles filtrantes (6) sur l'axe de lamelle (4).

6. Dispositif filtrant selon l'une quelconque des revendications précédentes 1 à 5, **caractérisé en ce que** la taille des lamelles intermédiaires (5) est inférieure à celle des lamelles filtrantes (6).

7. Dispositif filtrant selon l'une quelconque des revendications précédentes 1 à 6, **caractérisé en ce que** la lamelle intermédiaire (5) entre les lamelles filtrantes adjacentes (6) est formée de sorte qu'un espace (7) entre le bord le plus externe de la lamelle intermédiaire (5) et le bord le plus externe de la lamelle filtrante (6) en chevauchement entre lesdites lamelles filtrantes adjacentes (6) soit réduit à un minimum au cours de la révolution des lamelles filtrantes (6).

8. Dispositif filtrant selon l'une quelconque des revendications précédentes 1 à 7, **caractérisé en ce que** les lamelles filtrantes (6) présentent une forme rectangulaire.

9. Dispositif filtrant selon la revendication 8, **caractérisé en ce que** les lamelles intermédiaires (5) présentent une forme ovale.

10. Dispositif filtrant selon la revendication 9, **caractérisé en ce que** les lamelles intermédiaires (5) sont montées sur l'axe de lamelle (4) de sorte que leur axe longitudinal soit parallèle à la direction longitudinale des lamelles filtrantes (6).
